# EUROPEAN PATENT APPLICATION

(11) **EP 4 485 439 A1**
(43) Date of publication of application: **01.01.2025**
(21) Application number: 23824138.4
(22) Date of filing: 05.06.2023
(51) Int. Cl.: G09G 3/20, G09G 3/32, G09G 5/10, G09F 9/302

(54) **DISPLAY DEVICE AND CONTROL METHOD THEREFOR**

(30) Priority: 17.06.2022 KR 20220074446
(71) Applicant: Samsung Electronics Co., Ltd, Suwon-si, Gyeonggi-do 16677 (KR)
(72) Inventor: KIM, Sangwon, Suwon-si Gyeonggi-do 16677 (KR); LEE, Joohyun, Suwon-si Gyeonggi-do 16677 (KR)
(74) Representative: Appleyard Lees IP LLP
(86) International application number: PCT/KR2023/007705
(87) International publication number: WO 2023/243920

(57) **Abstract**

A display device and a control method for the display device are provided. A display device from among a plurality of display devices constituting a modular display device, according to one embodiment of the present disclosure, comprises: a plurality of display modules; a first communication interface; a second communication interface; and a processor for controlling the plurality of display modules so as to: identify the driving gain value of the display device on the basis of image data corresponding to an image displayed on the plurality of display modules from the entire image displayed on the modular display device; receive a first driving gain value from a first display device from among the plurality of display devices through the first communication interface; receive a second driving gain value from a second display device from among the plurality of display devices through the second communication interface; identify, on the basis of the magnitude of the driving gain value, one from among the driving gain value of the display device and the first and second driving gain values received through the first and second communication interfaces; and display an image corresponding to the image data on the basis of the identified driving gain value.

## Description

### [Technical Field]

The present disclosure relates to a display device and a control method therefor, and more particularly, to a display device included in the modular display device, and a control method therefor.

### [Background Art]

The development of display technology also leads to various screen sizes of a display device. Previously, it was only possible to produce a display device of a limited size. However, it has recently become possible to produce a large-screen display device, breaking away from such a limited size of the display device. Accordingly, usage of the large-screen display devices is increasing in real life.

In particular, there is an increasing usage of a modular display device providing an expanded display screen by combining a plurality of display modules with each other. For example, the large-screen display device may include a digital signage billboard installed in a place with a large floating population, such as a subway station or a bus stop, and then displaying an outdoor advertisement through the display device.

In case of the modular display device, a segmented image acquired by segmenting an entire image may be displayed on each of a plurality of display devices included in the modular display device. Here, the segmented image displayed on each display device may have a different luminance. The luminance may be related to recent high dynamic range (HDR) technology. The HDR technology is technology that adjusts the luminance of the segmented image displayed on each display device using a driving gain value corresponding to a remaining power other than power consumed to display the segmented image. Through the HDR technology, the modular display device may provide a clearer image by maximizing the contrast of each segmented image. However, each display device included in the modular display device may have a different remaining power. Accordingly, the segmented image displayed on each display device may also have the different luminance. The different luminance may cause a sense of heterogeneity in the entire image displayed on the display device, which is implemented in the segmented images.

### [Disclosure]

### [Technical Solution]

According to an embodiment of the present disclosure, provided is a display device included in a modular display device, the device including: a plurality of display modules; a first communication interface; a second communication interface; and a processor configured to identify a driving gain value of the display device on the basis of image data of an image corresponding to images displayed on the plurality of display modules among an entire image displayed on the modular display device, receive a first driving gain value from a first display device among the plurality of display devices through a first communication interface, receive a second driving gain value from a second display device among the plurality of display devices through a second communication interface, identify one of the driving gain value of the display device and the first and second driving gain values received through the first and second communication interfaces on the basis of a magnitude of the driving gain value, and control each of the plurality of display modules to display the image corresponding to the image data on the basis of the identified driving gain value, wherein the first driving gain value received from the first display device is one of the driving gain value of the first display device and the driving gain values of the display devices sequentially connected to the first display device based on a daisy chain structure among the plurality of display devices, and the second driving gain value received from the second display device is one of the driving gain value of the second display device and the driving gain values of the display devices sequentially connected to the second display device based on the daisy chain structure among the plurality of display devices.

The first driving gain value received from the first display device may be a minimum driving gain value among the driving gain value of the first display device and the driving gain values of the display devices sequentially connected to the first display device, the second driving gain value received from the second display device may be a minimum driving gain value among the driving gain value of the second display device and the driving gain values of the display devices sequentially connected to the second display device, and the processor may be configured to identify the minimum driving gain value among the driving gain value of the display device and the first and second driving gain values received through the first and second communication interfaces, and control the display device to display the image corresponding to the image data on the basis of the identified minimum driving gain value.

The processor may be configured to identify the driving gain value of the display device for each image frame based on the image data corresponding to each of the plurality of image frames included in the image, and control the display device to display the image on the basis of the identified driving gain value at a time point set based on the number of the plurality of display devices and the identification value of the display device.

The processor may be configured to identify a minimum driving gain value between the first driving gain value received from the first display device through the first communication interface and the driving gain value of the display device, and transmit the identified minimum driving gain value to the second display device through the second communication interface.

The processor may be configured to identify a minimum driving gain value between the second driving gain value received from the second display device through the second communication interface and the driving gain value of the display device, and transmit the identified minimum driving gain value to the first display device through the first communication interface.

The processor may be configured to segment data corresponding to the identified minimum driving gain value into first data and second data, transmit the first data to the second display device through the second communication interface, and then transmit the second data to the second display device through the second communication interface.

The display device may display the image corresponding to the display device on the basis of the driving gain value equal to those of the plurality of display devices.

The first display device may be adjacent to the display device disposed on one side of the display device, and the second display device may be adjacent to the display device disposed on the other side of the display device.

According to an embodiment of the present disclosure, provided is control method for a display device among the plurality of display devices included in a modular display device, the method including: identifying a driving gain value of the display device on the basis of image data corresponding to images displayed on the plurality of display devices among an entire image displayed on the modular display device; receiving a first driving gain value from a first display device among the plurality of display devices through a first communication interface; receiving a second driving gain value from a second display device among the plurality of display devices through a second communication interface; identifying one of the driving gain value of the display device and the first and second driving gain values received through the first and second communication interfaces on the basis of a magnitude of the driving gain value; and displaying the image corresponding to the image data on the basis of the identified driving gain value, wherein the first driving gain value received from the first display device is one of the driving gain value of the first display device and the driving gain values of the display devices sequentially connected to the first display device based on a daisy chain structure among the plurality of display devices, and the second driving gain value received from the second display device is one of the driving gain value of the second display device and the driving gain values of the display devices sequentially connected to the second display device based on the daisy chain structure among the plurality of display devices.

The first driving gain value received from the first display device may be a minimum driving gain value among the driving gain value of the first display device and the driving gain values of the display devices sequentially connected to the first display device, the second driving gain value received from the second display device may be a minimum driving gain value among the driving gain value of the second display device and the driving gain values of the display devices sequentially connected to the second display device, in the identifying of the one of the driving gain value of the display device and the first and second driving gain values received through the first and second communication interfaces, the minimum driving gain value may be identified among the driving gain value of the display device and the first and second driving gain values received through the first and second communication interfaces, and in the displaying, the image corresponding to the image data may be displayed on the basis of the identified minimum driving gain value.

In the identifying of the driving gain value of the display device, the driving gain value of the display device for each image frame may be identified based on the image data corresponding to each of the plurality of image frames included in the image, and in the displaying, the display device may be controlled to display the image on the basis of the identified driving gain value at a time point set based on the number of the plurality of display devices and the identification value of the display device.

The method may further include: identifying a minimum driving gain value between the first driving gain value received from the first display device through the first communication interface and the driving gain value of the display device; and transmitting the identified minimum driving gain value to the second display device through the second communication interface.

The method may further include: identifying a minimum driving gain value between the second driving gain value received from the second display device through the second communication interface and the driving gain value of the display device; and transmitting the identified minimum driving gain value to the first display device through the first communication interface.

The transmitting may further include segmenting data corresponding to the identified minimum driving gain value into first data and second data, transmitting the first data to the second display device through the second communication interface, and then transmitting the second data to the second display device through the second communication interface.

In the displaying, the image corresponding to the display device may be displayed on the basis of the driving gain value equal to those of the plurality of display devices.

The first display device may be adjacent to the display device disposed on one side of the display device, and the second display device may be adjacent to the display device disposed on the other side of the display device.

### [Description of Drawings]

FIG. 1 is a diagram showing a modular display device according to an embodiment of the present disclosure.
FIG. 2 is a diagram for explaining a display device included in the modular display device, according to an embodiment of the present disclosure.
FIG. 3 is a block diagram of the display device according to an embodiment of the present disclosure.
FIG. 4 is an example diagram showing that the display device receives a driving gain value from a first display device through a first communication interface, and receives a driving gain value from a second display device through a second communication interface, according to an embodiment of the present disclosure.
FIG. 5 is an example diagram showing that the display device receives the minimum driving gain value from the first display device through the first communication interface, and receives the minimum driving gain value from the second display device through the second communication interface, according to an embodiment of the present disclosure.
FIG. 6 is an example diagram showing that a display device receives the minimum driving gain value from a first display device through a first communication interface, and receives the minimum driving gain value from a second display device through a second communication interface, according to another embodiment of the present disclosure.
FIG. 7 is an example diagram showing that the display device transmits the driving gain value from the first display device through the first communication interface, and transmits the driving gain value from the second display device through the second communication interface, according to an embodiment of the present disclosure.
FIG. 8 is a diagram for explaining the display device that displays an image on the basis of an identified driving gain value at a time point set based on the number of the plurality of display devices and an identification value of the display device, according to an embodiment of the present disclosure.
FIG. 9 is an example diagram showing that the display device transmits the driving gain value to the second display device through the second communication interface, and receives the second driving gain value from the second display device through the second communication interface, according to another embodiment of the present disclosure.
FIG. 10 is an example diagram showing that an image corresponding to each display device is displayed on the basis of the driving gain value equal to those of the plurality of display devices included in the modular display device, according to an embodiment of the present disclosure.
FIG. 11 is a detailed configuration diagram of the display device according to an embodiment of the present disclosure.
FIG. 12 is a flowchart schematically showing a control method for a display device according to an embodiment of the present disclosure.

### [Best Mode]

Terms used in the specification are briefly described, and the present disclosure is then described in detail.

General terms currently widely used are selected as terms used in embodiments of the present disclosure in consideration of their functions in the present disclosure, and may be changed based on the intentions of those skilled in the art or a judicial precedent, the emergence of a new technique, or the like. In addition, in a specific case, terms arbitrarily chosen by an applicant may exist. In this case, the meanings of such terms are mentioned in detail in corresponding description portions of the present disclosure. Therefore, the terms used in the present disclosure need to be defined on the basis of the meanings of the terms and the contents throughout the present disclosure rather than simple names of the terms.

The present disclosure may be variously modified and have several embodiments, and specific embodiments of the present disclosure are thus shown in the drawings and described in detail in the detailed description. However, it is to be understood that the present disclosure is not limited to the specific embodiments, and includes all modifications, equivalents, and substitutions without departing from the scope and spirit of the present disclosure. Omitted is a detailed description of a case where it is decided that the detailed description of the known art related to the present disclosure may obscure the gist of the present disclosure.

Terms "first", "second", and the like, may be used to describe various components. However, the components are not to be construed as being limited by these terms. Terms are used only in order to distinguish one component and another component from each other.

The term of a singular number includes its plural number unless explicitly interpreted otherwise in the context. It is to be understood that terms "include" or "have" used in the present disclosure specify the presence of features, numerals, steps, operations, components, parts mentioned in the specification, or combinations thereof, and do not preclude the presence or addition of one or more other features, numerals, steps, operations, components, parts, or combinations thereof.

In the present disclosure, a "module" or a "-er/-or" may perform at least one function or operation, and be implemented by hardware, software, or a combination of hardware and software. In addition, a plurality of "modules" or a plurality of "~ers/~ors" may be integrated in at least one module to be implemented by at least one processor (not shown) except for a "module" or a "-er/or" that needs to be implemented by specific hardware.

Hereinafter, the embodiments of the present disclosure are described in detail with reference to the accompanying drawings so that those skilled in the art to which the present disclosure pertains may easily practice the present disclosure. However, the present disclosure may be modified in various different forms, and is not limited to the embodiments provided in the specification. In addition, in the drawings, portions unrelated to the description are omitted to clearly describe the present disclosure, and similar portions are denoted by similar reference numerals throughout the specification.

Hereinafter, the present disclosure is described in detail with reference to the accompanying drawings.

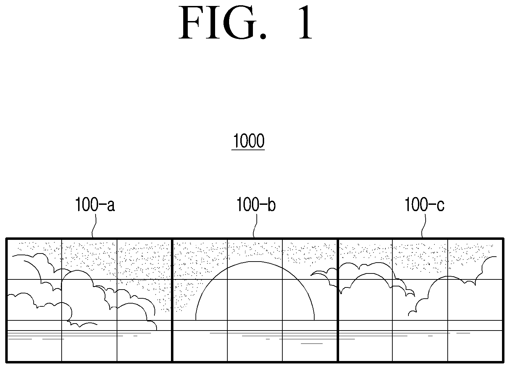

FIG. 1 is a diagram showing a modular display device according to an embodiment of the present disclosure.

A modular display device 1000 according to an embodiment of the present disclosure may include a plurality of display devices. For example, as shown in FIG. 1, the modular display device 1000 may include three display devices 100-a, 100-b, and 100-c combined with each other in a 1 x 3 matrix form. However, here, the 1 x 3 matrix form in which the plurality of display devices are arranged is only an embodiment, and the arrangement form and number of display devices may be changed in some embodiments.

The plurality of display devices 100-a, 100-b, and 100-c may be physically connected to each other to thus implement one modular display device 1000. To this end, each of a plurality of display devices 100 according to the embodiment of the present disclosure may be connected to each other in a daisy chain manner, and is not necessarily limited thereto.

Here, the modular display device 1000 may be implemented as a single large display device, such as a digital signage or electronic display, in which the plurality of display devices 100 are combined or assembled to each other.

To this end, the display device 100 may include a plurality of coupling devices enabling the display device 100 to be combined to another display device. Each display device may be physically connected to the plurality of adjacent other display devices through the plurality of coupling devices. In addition, in this way, the plurality of display devices 100 may be disposed to be adjacent to each other to thus form a screen of the modular display device 1000.

Here, the modular display device 1000 according to an embodiment of the present disclosure may output an image through the plurality of display devices 100 included in the modular display device 1000. In detail, the modular display device 1000 may output an entire image through an entire screen implemented by combining the plurality of display devices 100 to each other in case that the respective display devices 100 are combined to each other based on a predetermined arrangement form.

Here, a portion of the entire image may be output on each of the display devices 100. For example, referring to FIG. 1, the display device 100-a on a left side may display a left area of the image, the display device 100-b on the center may display a central area of the image, and the display device 100-c on a right side may display a right area of the image. That is, each of the display devices 100-a, 100-b, and 100-c may display a partial image of the entire image corresponding to a position where each display device is disposed in the modular display device 1000.

Meanwhile, the plurality of display devices 100 according to an embodiment of the present disclosure may use an identification value set for each display device 100 to display each of the plurality of segmented images acquired by segmenting the entire image. That is, each of the display devices 100 may determine image data corresponding to the identification value of each display device from input image data on the basis of the identification value set for the display device 100.

In detail, each display device 100 may extract the image data for displaying the partial image corresponding to each display device 100 from the image data corresponding to the entire input image on the basis of the identification value of each the display device 100. In addition, each display device 100 may display the partial image corresponding to each display device that is acquired by segmenting the entire image on the basis of the extracted image data.

Here, the identification value of each display device may be predetermined for each display device based on the arrangement form of the plurality of display devices. For example, referring back to FIG. 1, the plurality of display modules 110-a, 110-b, and 110-c may be arranged in the 1 x 3 matrix form. In this case, the disposed display device 110-a disposed on the left side may have an identification value (e.g., 001) set for displaying an image in a first area (e.g., left area) among images corresponding to the input image data, the display device 110-b disposed in the center may have an identification value (e.g., 002) set for displaying an image in a second area (e.g., central area) among the images corresponding to the input image data, and the display device 110-c disposed on the right side may have an identification value (e.g., 003) set for displaying an image in a third area (e.g., right area) among the images corresponding to the input image data.

Meanwhile, the description above describes that the plurality of display devices receive the image data and determine the image data corresponding to the identification value among the image data, which is only an embodiment, and according to the embodiment of the present disclosure, the image data corresponding to each display device may be identified by a main processor included in the modular display device 1000.

In detail, the main processor may determine the image data (that is, data for displaying the partial image acquired by segmenting the entire image) corresponding to each display device among the image data on the basis of the identification value set for each display device, and transmit the determined image data respectively to the plurality of display devices.

Meanwhile, the image may be an image received from an external device (e.g., set-top box, computer, or server), or may be an image pre-stored in the modular display device 1000.

The modular display device 1000, including the plurality of display devices 100, may be referred to as a main screen, a wall display, a video wall, or the like, in some embodiments. In addition, the plurality of display devices included in the modular display device 1000 may each be referred to as a sub-screen or a cabinet in some embodiments.

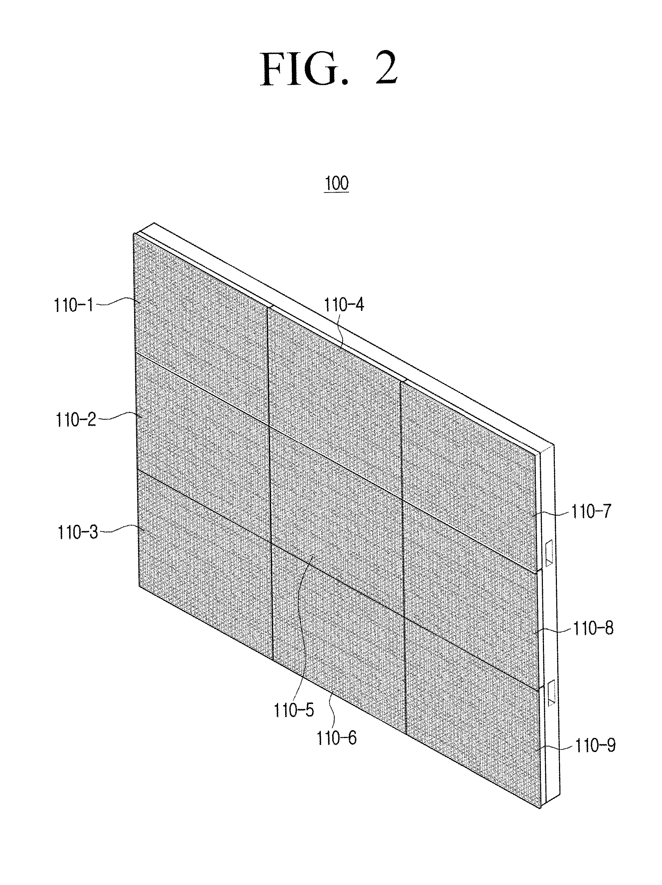

FIG. 2 is a diagram for explaining the display device included in the modular display device, according to an embodiment of the present disclosure.

The display device 100 according to an embodiment of the present disclosure may include one or more display modules. For example, as shown in FIG. 2, the display device 100 may include nine display modules 110-1 to 110-9. Here, each of the display modules 110-1 to 110-9 may be physically connected to each other to thus form one display device 100.

To this end, the display device 100 may include a base plate (not shown) on which the plurality of display modules 110-1 to 110-9 may be disposed. Here, the base plate may be implemented in a form that allows a plurality of display modules 110 to be mounted on a front surface of the base plate.

According to an embodiment of the present disclosure, the plurality of display modules 110 included in the display device 100 may be disposed in a matrix form (e.g., M x N, where M and N are natural numbers). For example, referring to FIG. 2, the nine display modules 110-1 to 110-9 may be disposed in a 3 x 3 matrix form to thus form the display device 100. Here, the plurality of display modules 110-1 to 110-9 included in the display device 100 may be physically connected to each other. Meanwhile, the plurality of display modules 110 disposed in a form of the 3 x 3 matrix corresponds to an example of the present disclosure, and the arrangement form of the display modules 110 and the number of the display modules 110 included in the display device 100 may be changed in various ways.

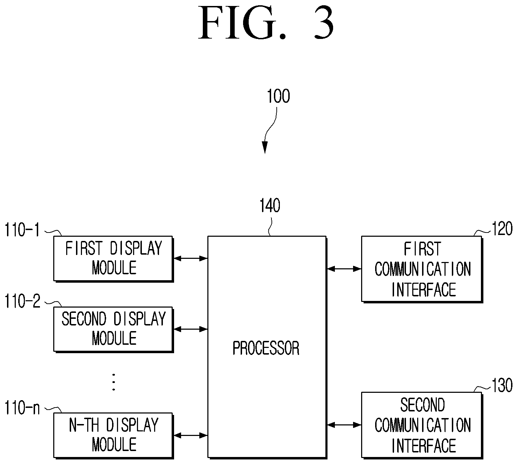

FIG. 3 is a block diagram of the display device according to an embodiment of the present disclosure.

Referring to FIG. 3, the display device 100 according to an embodiment of the present disclosure may include the plurality of display modules 110-1, 110-2, ..., and 110-n (hereinafter referred to as 110), a first communication interface 120, a second communication interface 130, and a processor 140.

A description of the display device may be equally applied to that of another display device in that the display device 100, described below, has the same structure and function as a plurality of other display devices included in the modular display device 1000.

According to an embodiment of the present disclosure, the display device 100 may be adjacent to a first display device 100-1 and a second display device 100-2 to implement the modular display device 1000. Here, the first display device 100-1 may be a display device adjacent to the display device 100 disposed on one side of the display device 100, and the second display device 100-2 may be a display device adjacent to the display device 100 disposed on the other side of the display device 100.

That is, the first display device 100-1 and the second display device 100-2 may be display devices adjacent to the display device 100 from the different sides, based on the display device 100. For example, in case that the first display device 100-1 is disposed on an upper side of the display device 100, the second display device 100-2 may be adjacent to any of the left side, right side, or lower side excluding the upper side of the display device 100.

According to an embodiment of the present disclosure, the display device 100 may display an image (e.g., segmented image among the entire image) corresponding to the position or identification value of the display device 100 through the plurality of display modules 110.

According to an embodiment of the present disclosure, each of the display modules 110 may be implemented as a light emitting diode (LED) display module including an inorganic LED. In detail, each display module 110 may be implemented as the LED display module including a plurality of pixels in which subpixels of a red LED, a green LED, and a blue LED, are implemented on one chip.

According to an embodiment, the above-described LED may be a micro LED. Here, the micro LED may be an LED having a size of about 5 to 100 micrometers, and may be an ultrasmall light-emitting device that emits light on its own without a color filter.

Meanwhile, the plurality of pixels included in the display module 110 may be electrically connected to a driver integrated circuit (IC). In addition, the driver IC may be electrically connected to a timing controller, and control the emission of the plurality of pixels based on control of the timing controller. In detail, the timing controller may transmit, to the driver IC, the image data for controlling the plurality of pixels, and the driver IC may convert the image data to analog data for controlling the plurality of pixels and output a current or apply a voltage to the plurality of pixels based on the analog data. In addition, the plurality of pixels may each emit light on the basis of the current output by the driver IC or the voltage applied by the driver IC.

To this end, the display device 100 may include a power supply device (e.g., switched-mode power supply (SMPS)), the driver IC, the timing controller (TCON), or the like, which supplies power to a plurality of components included in the display device 100.

According to an embodiment, the plurality of pixels included in the display module 110 may be arranged in a matrix form (e.g., K x L, where K and L are the natural numbers). In detail, the matrix may have a rectangular arrangement form (e.g., K = L, where K and L are natural numbers, 16 x 16 arrangement, or 24 x 24 arrangement) or have a different arrangement form (e.g., K ≠ L, where K and L are natural numbers).

Meanwhile, the above-mentioned LED display module may be an embodiment of the present disclosure, and the display module 110 may be implemented as various the display modules such as an organic LED (OLED) or an active-matrix OLED (AMOLED) .

Hereinafter, for convenience of description, the description is provided assuming that the display module 110 according to an embodiment of the present disclosure is the LED display module.

Meanwhile, the first communication interface 120 according to an embodiment of the present disclosure may communicate with at least one other display device adjacent to the display device 100 among the plurality of display devices included in the modular display device 1000. The display device 100 may transmit and receive various information through the first communication interface 120 from at least one other display device connected thereto through the first communication interface 120.

In addition, the second communication interface 130 according to an embodiment of the present disclosure may communicate with at least one other display device adjacent to the display device 100 that is connected thereto through the second communication interface 130 among the plurality of display devices included in the modular display device 1000. The display device 100 may transmit and receive the various information from at least one other display device through the second communication interface 130.

Here, at least one other display device communicating with the display device 100 through the first communication interface 120 and at least one other display device communicating with the display device 100 through the second communication interface 130 may be different from each other.

Meanwhile, according to an embodiment of the present disclosure, the first communication interface 120 and the second communication interface 130 may be ports that use a universal asynchronous receiver transmitter (UART) communication method. The UART communication refers to a communication method that transmits and receives data by converting a parallel data form to a serial data form. Here, a communication standard such as RS-232, RS-422, or RS-485 may be applied to the first communication interface 120 or the second communication interface 130.

According to an embodiment of the present disclosure, the display device 100 may perform the UART communication with the first display device 100-1 adjacent to the display device 100 disposed on one side of the display device 100 through the first communication interface 120. In addition, the display device 100 may perform the UART communication with the second display device 100-2 adjacent to the display device 100 disposed on the other side of the display device 100 through the second communication interface 130.

In detail, the display device 100 may perform the UART communication with the first display device 100-1 through a cable connecting the first communication interface 120 of the display device 100 and the second communication interface of the first display device 100-1 to each other. In addition, the display device 100 may perform the UART communication with the second display device 100-2 through a cable connecting the second communication interface 130 of the display device 100 and the first communication interface of the second display device 100-2 to each other. Here, the first and second display devices 100-1 and 100-2 do not perform the UART communication with each other through each communication interface (e.g., first communication interface of the first display device 100-1 or the second communication interface of the second display device 100-2. That is, according to an embodiment of the present disclosure, the plurality of display devices 100 included in the modular display device 1000 may be connected to each other through a serial connection method. Here, a connection form of the plurality of display devices 100 may have an open loop form rather than a closed loop form.

The processor 140 may control overall operations of the display device 100. In detail, the processor 140 may control hardware or software components connected to the processor 140 by driving an operating system or an application program, and may perform various data processing and operations. In addition, the processor 140 may load and process instructions or data received from at least one of other components into a volatile memory, and store various data in a non-volatile memory.

To this end, the processor 140 may be indicated by any of various names such as a central processing unit (CPU), an application processor (AP), a digital signal processor (DSP), a microprocessor, a micro controller unit (MCU), a micro processing unit (MPU), a neural processing unit (NPU), a controller, and the timing controller (TCON), and the specification uses its name as the processor 140.

The processor 140 may be implemented as a system-on-chip (SoC) or a large scale integration (LSI), or may be implemented in the form of a field programmable gate array (FPGA). In addition, the processor 140 may include a volatile memory such as a static random access memory (SRAM).

The processor 140 may convert parallelized data related to the display device 100 to a serial bit stream to perform the UART communication. In addition, the processor 140 may convert the serial bit stream received through the UART communication to the parallelized data.

In addition, the processor 140 may transmit or receive the serial bit stream corresponding to specific data, and then generate a parity bit to thus transmit or receive additional data. In addition, the processor 140 may perform functions of adding and deleting start bits and stop bits for asynchronous communication based on the UART communication method.

In addition, the processor 140 may be electrically connected to the plurality of display modules 110, and may transmit and receive various data such as the image data and control data.

Meanwhile, according to an embodiment of the present disclosure, the processor 140 may identify the driving gain value of the display device 100.

According to an embodiment of the present disclosure, the driving gain value may be the remaining power ratio or remaining power value of the SMPS in the display device 100 that is identified based on power consumption of the plurality of display modules 110.

Alternatively, in some embodiments of the present disclosure, the driving gain value may be a current value used to increase the luminance of the image displayed on the plurality of display modules 110 in response to the remaining power.

Hereinafter, for convenience of description of the present disclosure, the driving gain value is described assuming the remaining power ratio of the SMPS.

The processor 140 may identify the image data corresponding to the display device 100 to identify the driving gain value. As described above, the processor 140 may identify the image data regarding the segmented image corresponding to the display device 100. In addition, the processor 140 may identify a driving current value for driving the plurality of pixels included in each of the plurality of display modules 110 to display the image data related to the segmented image.

In addition, the processor 140 may identify the power consumption of the plurality of display modules 110 corresponding to the image data related to the segmented image, on the basis of the identified driving current value. In addition, the processor 140 may identify the remaining power of the SMPS on the basis of the identified power consumption. Here, the remaining power may be a value acquired by subtracting the identified power consumption based on the image data from an appropriate capacity of the SMPS. In this way, the processor 140 may identify the driving gain value based on the image data related to the segmented image corresponding to the display device 100.

Here, the processor may use a power model that includes a relationship between the image data and the power consumption of each of the plurality of pixels to calculate the power consumption of the plurality of display modules 110. Here, the power model may be implemented in a lookup table or a mathematical equation.

The driver IC included in the display device 100 may output a driving current (or a driving current corresponding to the identified power consumption) corresponding to the image data corresponding to the segmented image to each pixel included in the plurality of display modules 110. In this case, each pixel may output light based on the received driving current, and light output from the respective pixels may be combined to each other to thus form the segmented image corresponding to the display device 100 among the entire image.

In addition, the processor 140 may increase the luminance of the image displayed on each of the plurality of display modules 110 by using the driving gain value, that is, the remaining power. In this way, the display device 100 may provide a clearer image to the user by improving a contrast of the image displayed on the plurality of display modules 110.

Meanwhile, the processor 140 may identify the driving gain value, and increase the luminance of the image displayed on the plurality of display modules 110 on the basis of the driving gain value in case that a drive mode of the display device 100 is set to a high dynamic range mode. Here, the high dynamic range mode may be a mode that provides the clearer image by maximizing a difference between bright and dark portions of the image displayed on the display device 100.

Meanwhile, the driving gain value identified in each of the plurality of display devices 100 included in the modular display device 1000 may be different. The reason is that the image displayed on each display device is the partial image corresponding to the position or identification value of each display device among the entire image, and the power consumption consumed by each display device may thus be different. Accordingly, the luminance of the image that is adjusted on the basis of the driving gain value displayed on each display device may be different. That is, a luminance deviation may occur between the plurality of partial images included in the entire image. The luminance deviation may cause a sense of heterogeneity in the entire image, reduce an immersion of the user watching the entire image, and cause fatigue to user eyes.

Therefore, to solve this problem, the plurality of display devices included in the modular display device 1000 is required to apply the same driving gain value used to increase the luminance of the image. To this end, the display device 100 is required to share driving gain value information of each display device with the plurality of other display devices included in the modular display device 1000.

That is, the display device 100 and the plurality of other display devices may be connected based on a wireless communication method or a wired communication method, the driving gain value of each display device may then be transmitted and received, and the driving gain values of all the display devices may then be required to be identified.

However, a cost problem of having to add a wireless communication module to each display device may occur in case of using the wireless communication method, and space limitation may occur due to the plurality of cables used to connect the respective display devices to each other in case of using the wired communication method.

To solve this problem, the present disclosure may transmit and receive the driving gain value between the plurality of display devices adjacent to each other through a UART communication interface capable of two-way communication.

In particular, according to an embodiment of the present disclosure, each display device may transmit only one of the driving gain value received from another adjacent display device and the driving gain value of the identified display device 100 to still another adjacent display device.

This way may have exert substantially the same effect as if each display device shared the driving gain values of all the display devices with each other even though the plurality of display devices included in the modular display device 1000 are not all connected to each other. Hereinafter, an embodiment of the present disclosure related to this configuration is described in detail.

First, according to an embodiment of the present disclosure, the processor 140 may identify the driving gain value of the display device 100 based on the image data of the image corresponding to the image displayed on the plurality of display modules 110 among all the images displayed on the modular display device 1000.

In detail, the processor 140 may acquire the image data corresponding to the display device 100 on the basis of position information of the display device 100 in the modular display device 1000 or the identification value of the display device 100.

Here, the image data corresponding to the display device 100 may be the image data corresponding to the segmented image displayed on the display device 100 through the plurality of display modules 110 among the entire image displayed on the modular display device 1000.

Meanwhile, the processor 140 may acquire the image data corresponding to the segmented image to be displayed on the display device 100 from the image stored in the memory or the entire image received through the communication device to acquire the image data corresponding to the segmented image corresponding to the display device 100. To this end, the processor 140 may use the position of the display device 100 in the modular display device 1000 or the identification value of the display device 100.

For example, referring back to FIG. 1, assuming that the display device 100-b disposed in the center among the plurality of display devices disposed in the 1 x 3 matrix form is the display device 100, the processor 140 may identify the segmented image corresponding to the central area among the entire image as the image to be displayed on the display device 100 on the basis of position information of the display device 100-b disposed in the center. In addition, the processor 140 may acquire only the image data corresponding to the segmented image corresponding to the central area among the image data for the identified entire image.

Alternatively, assume that the identification values of 001 to 003 are set sequentially from the left side for the plurality of display devices shown in FIG. 1. Here, assuming that the display device 100-a disposed on the left side, that is, the display device 100-a having the identification value of 001, is the display device 100 according to an embodiment of the present disclosure, the processor 140 may identify that the display device 100 is disposed on the left side on the basis of the identification value 001 of the display device 100. In addition, in configuring the identification value and the modular display device 1000, the processor 140 may identify the segmented image corresponding to the left area among the entire image as the image to be displayed by the display device 100 on the basis of the position information of the display device 100-a disposed on the left side. In addition, the processor 140 may acquire only the image data corresponding to the segmented image corresponding to the left area among the image data for the identified entire image.

Meanwhile, according to the embodiment of the present disclosure, the processor 140 may receive a command for setting the identification value of the display device 100 through the communication device or an input interface before identifying the image data of the image corresponding to the image displayed on the plurality of display modules 110.

For example, the processor 140 may receive an infrared (IR) command that sets the identification value of the display device 100 from a remote control that works with the display device 100 through an IR communication module included in the communication device. Here, the identification value set for the display device 100 may be a value corresponding to the position of each of the plurality of display devices included in the modular display device 1000.

In addition, according to an embodiment of the present disclosure, the processor 140 may receive information on the number of the plurality of display devices included in the modular display device 1000 together with the command for setting the identification value of the display device 100. That is, to again describe the example described above, the processor 140 may receive the information on the number of the plurality of display devices including the display device 100 and included in the modular display device 1000 from the remote control that works with the display device 100 through the IR communication module together with the command.

Meanwhile, according to an embodiment of the present disclosure, the processor 140 may display a user interface (UI) for setting the number of the plurality of display devices, the arrangement type based on the number of the plurality of display devices, and the identification value of the display device 100, through the display module. For example, the number of the plurality of display devices may be set to 4 through the UI for selecting or inputting the number of the plurality of display devices. In this case, the processor 140 may display a UI indicating various matrix shapes, such as 1 x 4, 2 x 2, or 4 x 1, in which four display devices may be disposed.

In addition, the processor 140 may display a UI for setting the position of the display device 100 and the identification value corresponding to the position within the matrix in case of selecting a specific matrix type among the plurality of matrix types by the user (or receiving a command for selecting a specific matrix type).

Meanwhile, the processor 140 may acquire the image data corresponding to the display device 100, and then identify the driving gain value of the display device 100 based on the acquired image data.

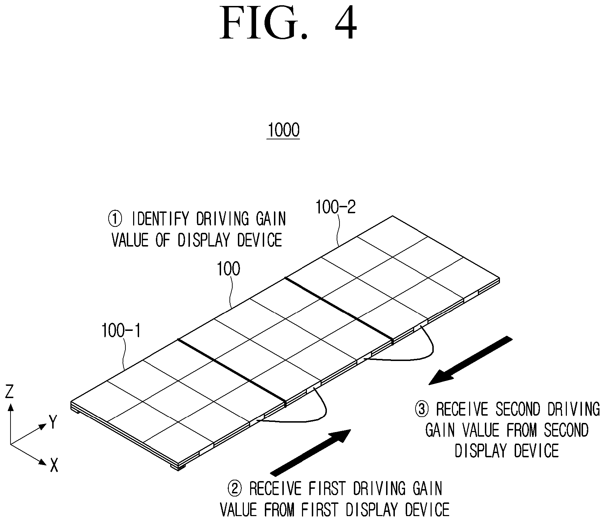

FIG. 4 is an example diagram showing that the display device receives the driving gain value from the first display device through the first communication interface, and receives the driving gain value from the second display device through the second communication interface, according to an embodiment of the present disclosure.

The processor 140 may identify the driving gain value for each of a plurality of image frames included in the image. That is, the processor 140 may identify the driving gain value of the display device 100 for each image frame.

In detail, the processor 140 may identify the image data related to the segmented image corresponding to the display device 100 among the image data corresponding to each image frame. In addition, the processor 140 may identify the power consumption for the segmented image based on the identified image data. In addition, the processor 140 may identify the driving gain value for the segmented image corresponding to the remaining power based on the identified power consumption. In this way, the processor 140 may identify the driving gain value of the display device 100 for each image frame.

In addition, the processor 140 may identify the driving gain value of the display device 100, then receive the driving gain value from the first display device 100-1 among the plurality of display devices through the first communication interface 120, and receive the driving gain value from the second display device 100-2 among the plurality of display devices through the second communication interface 130.

In detail, referring to FIG. 4, the processor 140 may identify the driving gain value of the display device 100, and then receive a first driving gain value from the first display device 100-1 connected through the first communication interface 120 among the plurality of display devices.

Here, the first driving gain value refers to the driving gain value received from the first display device 100-1, and may be different from the driving gain value identified for the first display device 100-1.

In addition, the processor 140 may receive the driving gain value from the first display device 100-1 through the first communication interface 120, and then receive a second driving gain value from the second display device 100-2 connected through the second communication interface 130 among the plurality of display devices.

Here, the second driving gain value refers to the driving gain value received from the second display device 100-2, and may be different from the driving gain value identified for the second display device 100-2.

Meanwhile, the description above describes that the first driving gain value is received from the first display device 100-1 through the first communication interface 120, and then the second driving gain value is received from the second display device 100-2 through the second communication interface 130. However, the present disclosure is not limited thereto. That is, the processor 140 may receive the second driving gain value from the second display device 100-2 through the second communication interface 130, and then receive the first driving gain value from the first display device 100-1 through the first communication interface 120. Alternatively, the processor 140 may simultaneously receive the first and second driving gain values from the first and second display devices 100-1 and 100-2.

Meanwhile, the processor 140 may receive a first serial bit stream corresponding to the first driving gain value from the first display device 100-1 through the first communication interface 120 based on the UART communication method. Here, the first serial bit stream may be a serial bit stream corresponding to the first driving gain value.

Here, the processor 140 may receive the serial bit stream corresponding to the first driving gain value multiple times. In detail, it is possible to transmit and receive up to 8 bits of data using the UART communication. Therefore, in case that a size of data corresponding to the first driving gain value exceeds 8 bits, the processor 140 may receive the data corresponding to the first driving gain value multiple times. That is, the data corresponding to the first driving gain value that has the size exceeding 8 bits may be segmented into a plurality of data having a size within 8 bits, and the plurality of segmented data may be transmitted to the processor 140 through the first communication interface 120 multiple times.

For example, assuming that the data corresponding to the first driving gain value is data of 11 bits, the processor 140 may receive first data of 7 bits, included in the data of the driving gain value, and then receive second data of 4 bits. In addition, the processor 140 may convert the serial data of 11 bits acquired by combining the received first data of 7 bits and the second data of 4 bits to driving gain value data in parallel form, and then identify the first driving gain value received from the first display device 100-1. However, the present disclosure is not limited thereto, and the first and second data may be segmented into various sizes.

Meanwhile, the serial bit stream corresponding to the first driving gain value received by the processor 140 from the first display device 100-1 may further include a cyclical redundancy check (CRC) bit. Here, the CRC bit may be generated on the basis of the first driving gain value determined to transmit by the first display device 100-1. In addition, the processor 140 may extract the CRC bit from the serial bit stream, and then identify whether the data corresponding to the first driving gain value received from the first display device 100-1 is appropriate.

Here, the same mathematical equation used to generate the CRC bits may be stored in the display device 100 and the first display device 100-1. Therefore, the display device 100 may generate a new CRC bit by applying the mathematical equation used to generate the CRC bit to the data corresponding to the first driving gain value received from the first display device 100-1. In addition, the processor 140 may compare the CRC bit received from the first display device 100-1 with the newly generated CRC bit, and determine that the data corresponding to the first driving gain value received from the first display device 100-1 is appropriate or detect an error.

Meanwhile, the description above may be equally applied to the second driving gain value. That is, as an example, the processor 140 may receive a second serial bit stream corresponding to the second driving gain value from the second display device 100-2 through the second communication interface 130 based on the UART communication method. Here, the second serial bit stream may be a serial bit stream corresponding to the second driving gain value. Here, the processor 140 may receive the serial bit stream corresponding to the second driving gain value multiple times. In addition, the serial bit stream corresponding to the second driving gain value received by the processor 140 from the second display device 100-2 may further include the cyclical redundancy check (CRC) bit. The description omits its details.

Meanwhile, according to an embodiment of the present disclosure, the first driving gain value received from the first display device 100-1 may be one of the driving gain value of the first display device 100-1 and the driving gain values of the display devices sequentially connected to the first display device 100-1 based on a daisy chain structure among the plurality of display devices. In addition, the second driving gain value received from the second display device 100-2 may be one of the driving gain value of the second display device 100-2 and the driving gain values of the display devices sequentially connected to the second display device 100-2 based on the daisy chain structure among the plurality of display devices.

In detail, the first display device 100-1 may be connected to a third display device 100-3, adjacent to one side of the first display device 100-1 based on the daisy chain structure, through a first communication interface 120-1 of the first display device 100-1. Here, a cable connecting the third display device 100-3 and the first display device 100-1 to each other may be connected to the first communication interface 120-1 of the first display device 100-1 and a second communication interface 130-3 of the third display device.

In addition, the second display device 100-2 may be connected to a fourth display device 100-4, adjacent to one side of the second display device 100-2 based on the daisy chain structure, through a second communication interface 120-2 of the second display device 100-2. Here, a cable connecting the fourth display device 100-4 and the second display device 100-2 to each other may be connected to a second communication interface 130-2 of the second display device 100-2 and a first communication interface 120-4 of the fourth display device.

Here, the first display device 100-1 may determine one of a third driving gain value received from the third display device 100-3 and the driving gain value identified for the first display device 100-1 as the first driving gain value, and transmit the same to the display device 100 through a second communication interface 130-1 of the first display device 100-1.

Here, the third driving gain value refers to the driving gain value received from the third display device 100-3, and may be different from the driving gain value identified for the third display device 100-3.

Here, the second display device 100-2 may determine one of a fourth driving gain value received from the fourth display device 100-4 and the driving gain value identified for the second display device 100-2 as the second driving gain value, and transmit the same to the display device 100 through the first communication interface 120-2 of the second display device 100-2.

Here, the fourth driving gain value refers to the driving gain value received from the fourth display device 100-4, and may be different from the driving gain value identified for the fourth display device 100-4.

Here, according to an embodiment of the present disclosure, the first driving gain value received from the first display device 100-1 may be the minimum driving gain value among the driving gain value of the first display device 100-1 and the driving gain values of the display devices sequentially connected to the first display device 100-1.

Here, the display device sequentially connected to the first display device 100-1 based on the first display device 100-1 may not be the display device 100, but be another display device connected to the first display device 100-1 or may be still another display device sequentially connected to the first display device 100-1 through another display device.

For example, assume that the first display device 100-1 is connected to the third display device 100-3 through the first communication interface 120-1 of the first display device 100-1, and connected to the display device 100 through the second communication interface 130-1. Here, with regard to the first driving gain value, the display device sequentially connected to the first display device 100-1 may be the third display device 100-3 or still another display device sequentially connected to the first display device 100-1 through the third display device 100-3.

Meanwhile, the second driving gain value received from the second display device 100-2 may be the minimum driving gain value among the driving gain value of the second display device 100-2 and the driving gain values of the display devices sequentially connected to the second display device 100-2.

Here, the display device sequentially connected to the second display device 100-2 based on the second display device 100-2 may not be the display device 100, but be another display device connected to the second display device 100-2 or may be still another display device sequentially connected to the second display device 100-2 through another display device.

For example, assume that the second display device 100-2 is connected to the display device 100 through the first communication interface 120-2 of the second display device 100-2 and the fourth display device 100-4 through the second communication interface 130-2. Here, with regard to the second driving gain value, the display device sequentially connected to the second display device 100-2 may be the fourth display device 100-4 or still another display device sequentially connected to the second display device 100-2 through the fourth display device 100-4.

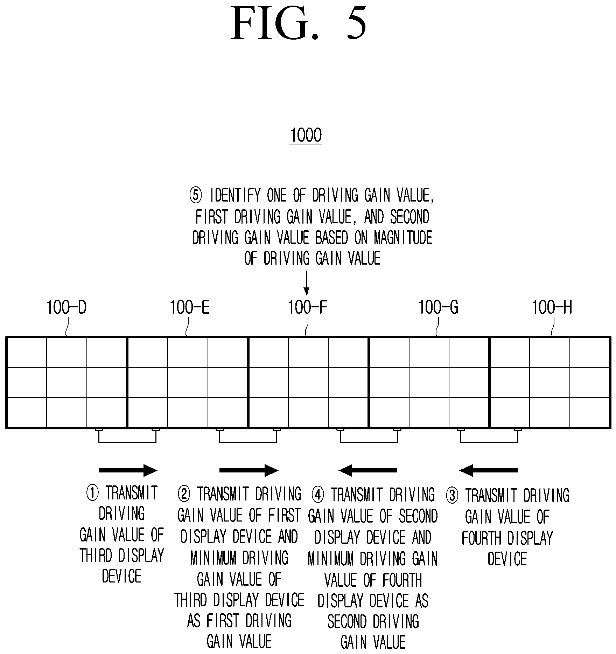

FIG. 5 is an example diagram showing that the display device receives the minimum driving gain value from the first display device 100-1 through the first communication interface, and receives the minimum driving gain value from the second display device through the second communication interface, according to an embodiment of the present disclosure.

In more detail, as shown in FIG. 5, assume that a display device F or 100-F refers to the display device 100 according to an embodiment of the present disclosure; a display device E or 100-E refers to the first display device 100-1 connected to the display device 100 through the first communication interface 120; and a display device G or 100-G refers to the second display device 100-2 connected to the display device 100 through the second communication interface 130. In addition, assume that a display device D or 100-D refers to the third display device 100-3 connected to display device E or 100-E, which is the first display device 100-1, in a first direction using the daisy chain method, and a display device H or 100-H refers to the fourth display device 100-4 connected to display device G or 100-G, which is the second display device 100-2, in a second direction using the daisy chain method.

Here, the first direction may be a direction where the display devices are sequentially connected to each other through the first communication interface of the first display device 100-1 is disposed based on the first display device 100-1.

Here, the second direction may be a direction where the display devices are sequentially connected to each other through the second communication interface of the second display device 100-2 based on the second display device 100-2.

Here, the first driving gain value received from the display device E or 100-E, which is the first display device 100-1, may be the minimum driving gain value between the driving gain value received by the processor of the display device E or 100-E from the display device D or 100-D, which is the third display device 100-3, and the driving gain value received the display device E or 100-E that is identified by the processor of the display device E or 100-E.

In detail, the processor of the display device E or 100-E may identify the driving gain value of the display device E or 100-E. In addition, the processor of the display device E or 100-E may receive the driving gain value of the display device D or 100-D from the display device D or 100-D through the first communication interface of the display device E or 100-E.

In addition, the processor of the display device E or 100-E may compare the identified driving gain value of the display device E or 100-E with the received driving gain value of the display device D or 100-D, and then transmit their minimum driving gain value as the first driving gain value to the display device F or 100-F through the second communication interface of the display device E or 100-E.

For example, assuming that the driving gain value of the display device E or 100-E is 40 and the driving gain value of the display device D or 100-D is 20, the first driving gain value received by the processor of the display device F or 100-F from the display device E or 100-E may be 20, which is the driving gain value of the display device D or 100-D.

Meanwhile, the second driving gain value received from the display device G or 100-G may be the minimum driving gain value between the driving gain value received by the processor of the display device G or 100-G from the display device H or 100-H and the driving gain value of the display device G or 100-G that is identified by the processor of the display device G or 100-G.

In detail, the processor of the display device G or 100-G may identify the driving gain value of the display device G or 100-G. In addition, the processor of the display device G or 100-G may receive the driving gain value of the display device H or 100-H through the second communication interface of the display device G or 100-G. In addition, the processor of the display device G or 100-G may compare the identified driving gain value of the display device G or 100-G with the received driving gain value of the display device H or 100-H, and then transmit their minimum driving gain value to the display device F or 100-F through the first communication interface of the display device G or 100-G.

For example, assuming that the driving gain value of the display device G or 100-G is 50 and the driving gain value of the display device H or 100-H is 25, the driving gain value received by the processor of the display device F or 100-F from the display device G or 100-G may be 25, which is the driving gain value of the display device H or 100-H.

Accordingly, the processor 140 of the display device F or 100-F corresponding to the display device 100 may acquire each of the driving gain value of the display device D or 100-D and the display device H or 100-H without direct connection with the display device D or 100-D disposed on the leftmost side and the display device H or 100-H disposed on the rightmost side, included in the modular display device 1000.

In addition, the processor 140 may identify one of the driving gain value of the display device and the first and second driving gain values received through the first and second communication interfaces 120 and 130 on the basis of a magnitude of the driving gain value.

In detail, the processor 140 may compare the magnitudes of the driving gain values of the display device, which are identified based on the first driving gain value received from the display device 100-1, the second driving gain value received from the display device 100-2, and the image data. In addition, the processor 140 may identify the driving gain value to be applied to the display device on the basis of a comparison result.

In addition, the processor 140 may control each of the plurality of display modules 110 to display the image corresponding to the image data on the basis of the identified driving gain value. In detail, the processor 140 may increase the luminance of the image corresponding to the image data on the basis of the identified driving gain value.

Meanwhile, according to an embodiment of the present disclosure, the processor 140 may identify the minimum driving gain value among the driving gain value of the display device and the first and second driving gain values received through the first and second communication interfaces 120 and 130, and control the display device to display the image corresponding to the image data on the basis of the identified driving gain value.

As described above, in accordance with an embodiment of the present disclosure, the first driving gain value received from the first display device 100-1 may be the minimum driving gain value among the driving gain value of the first display device 100-1 and the driving gain values of the display devices sequentially connected to the first display device 100-1, and the second driving gain value received from the display device 100-2 may be the minimum driving gain value among the driving gain value of the second display device 100-2 and the driving gain of the display devices sequentially connected to the second display device 100-2.

That is, the processor 140 may receive, as the first driving gain value, the driving gain value corresponding to the minimum value among the plurality of driving gain values related to the first display device 100-1 and one or more display devices sequentially connected to the first display device 100-1 among the plurality of display devices, from the first display device 100-1.

In addition, the processor 140 may receive, as the second driving gain value, the driving gain value corresponding to the minimum value among the plurality of driving gain values related to the second display device 100-2 and one or more display devices sequentially connected to the second display device 100-2 among the plurality of display devices, from the second display device 100-2.

In addition, the processor 140 may compare the received first driving gain value and second driving gain value with the driving gain value of the identified display device 100, and then identify the driving gain value corresponding to the minimum value.

Here, the driving gain value corresponding to the identified minimum value may correspond to the smallest value among the driving gain values of all the display devices included in the modular display device 1000.

In addition, the processor 140 may adjust the luminance of the image displayed on the display module 110 based on the driving gain value corresponding to the identified minimum value.

Meanwhile, as described above, the driving gain values of the plurality of display devices included in the modular display device 1000 may be different from each other. Accordingly, it is necessary to set the driving gain values of the plurality of display devices to the same value. To this end, each display device may be set to adjust its luminance to have the driving gain value corresponding to the minimum value among the plurality of driving gain values. The reason is that the display device having the driving gain value corresponding to the minimum value is unable to acquire the remaining power corresponding to the driving gain value having a value of the minimum value or more. Therefore, it is necessary to adjust the driving gain value of each display device to the driving gain value corresponding to the minimum value for the plurality of display devices 100 included in the modular display device 1000 to display each segmented image on the basis of the driving gain value that is common to all the devices.

Therefore, the processor 140 may compare the received first driving gain value and second driving gain value with the identified driving gain value of the display device 100, then identify the driving gain value corresponding to the minimum value, and control the display device to display the image corresponding to the image data on the basis of the driving gain value corresponding to the identified minimum value.

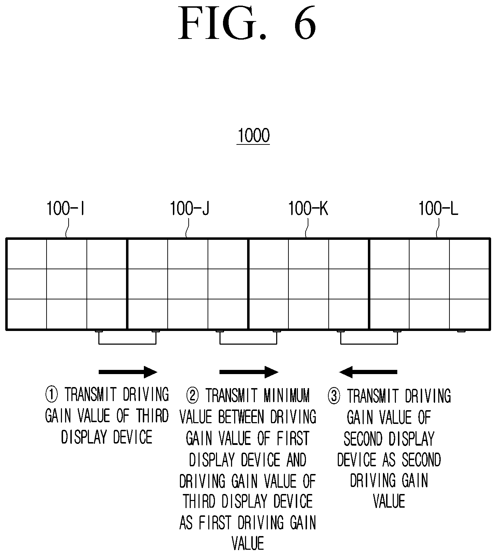

FIG. 6 is an example diagram showing that the display device receives the minimum driving gain value from the first display device through the first communication interface, and receives the minimum driving gain value from the second display device through the second communication interface, according to another embodiment of the present disclosure.

Meanwhile, according to another embodiment of the present disclosure, the first driving gain value received by the processor 140 from the first display device 100-1 may be the driving gain value of the first display device 100-1, and the driving gain value received from the second display device 100-2 may be the minimum driving gain value among the driving gain value of the second display device 100-2 and the driving gain values of the display devices sequentially connected to the second display device 100-2.

Alternatively, according to another embodiment of the present disclosure, the driving gain value received by the processor 140 from the first display device 100-1 may be the minimum driving gain value among the driving gain value of the first display device 100-1 and the driving gain values of the display devices sequentially connected to the first display device 100-1, and the driving gain value received from the second display device 100-2 may be the driving gain value of the second display device 100-2.

In detail, as shown in FIG. 6, assume that the display device 100 according to an embodiment of the present disclosure is a display device K or 100-K; the first display device 100-1 connected to the display device 100 through the first communication interface 120 is a display device J or 100-J; and the second display device 100-2 connected to the display device 100 through the second communication interface 130 is a display device L or 100-L.

In addition, assume that a display device I or 100-1 refers to the third display device 100-3 connected to the display device J or 100-J, which is the first display device 100-1, using the daisy chain method. Here, assume that no display device is combined to the display device 100-L, which is the second display device 100-2 in the second direction using the daisy chain connection method.

Here, the first direction may be the direction where the display devices are sequentially connected to each other through the first communication interface of the first display device 100-1 based on the first display device 100-1.

Here, the second direction may be the direction where the display devices are sequentially connected to each other through the second communication interface of the second display device 100-2 based on the second display device 100-2.

Here, the first driving gain value received by the processor 140 of the display device K or 100-K, which corresponds to the display device 100, from the display device J or 100-J, which is the first display device 100-1, may be the driving gain value received by the processor of the display device J or 100-J from the display device I or 100-1, which is the third display device 100-3, or the minimum driving gain value among the driving gain values of the display device E or 100-E that are identified by the processor of the display device J or 100-J.

On the other hand, the second driving gain value received by the processor 140 of the display device from the display device L or 100-L, which is the second display device 100-2, may be the driving gain value of the display device L or 100-L.

As described above, a type of driving gain value received by the processor of the display device may be different depending on the arrangement form of the plurality of display devices and the position of the display device.

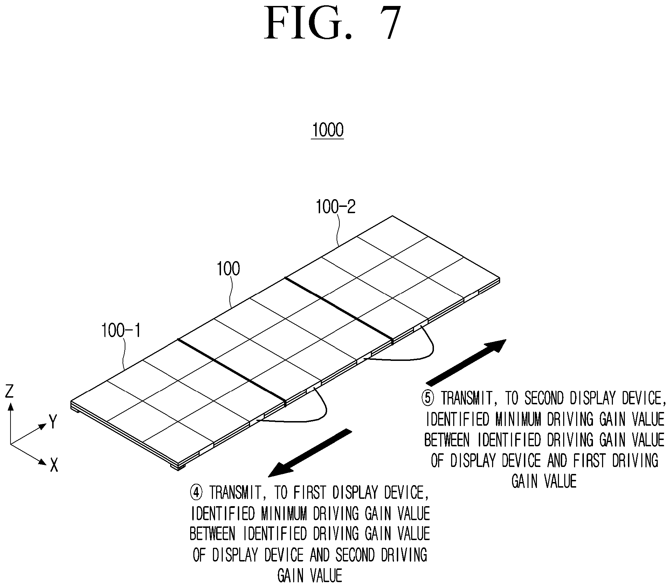

FIG. 7 is an example diagram showing that the display device transmits the driving gain value from the first display device through the first communication interface, and transmits the driving gain value from the second display device through the second communication interface, according to an embodiment of the present disclosure.

Meanwhile, according to an embodiment of the present disclosure, the processor 140 may identify the minimum driving gain value between the first driving gain value received from the first display device 100-1 through the first communication interface 120 and the driving gain value of the display device, and transmit the identified minimum driving gain value to the second display device 100-2 through the second communication interface 130.

In detail, referring to FIG. 7, the processor 140 may compare the first driving gain value received from the first display device 100-1 through the first communication interface 120 with the driving gain value of the display device, and identify the driving gain value to be transmitted to the second display device 100-2 through the second communication interface 130 on the basis of the comparison result.

Here, the processor 140 may transmit the driving gain value identified as being smaller between the identified driving gain value of the display device and the received first driving gain value to the second display device 100-2 through the second communication interface 130.

Meanwhile, before receiving the second driving gain value from the second display device 100-2 through the second communication interface 130, the processor 140 may identify the minimum driving gain value between the first driving gain value received from the first display device 100-1 through the first communication interface 120 and the driving gain value of the display device, and then transmit the identified minimum driving gain value to the second display device 100-2.

Here, a processor 140-2 of the second display device may receive the driving gain value, more precisely, the minimum driving gain value between the first driving gain value and the driving gain value of the display device, from the display device 100, and then transmit the second driving gain value.

In addition, according to an embodiment of the present disclosure, the processor 140 may also identify the minimum driving gain value between the second driving gain value received from the second display device 100-2 through the second communication interface 130 and the driving gain value of the display device, and transmit the identified minimum driving gain value to the first display device 100-1 through the first communication interface 120.

In detail, the processor 140 may determine the driving gain value to be transmitted to the first display device 100-1 through the first communication interface 120. To this end, the processor 140 may compare the second driving gain value received from the second display device 100-2 through the second communication interface 130 with the driving gain value of the display device. In addition, the processor 140 may transmit the driving gain value identified as the smaller value to the first display device 100-1 through the first communication interface 120.

Meanwhile, before receiving the driving gain value from the first display device 100-1 through the first communication interface 120, the processor 140 may identify the minimum driving gain value between the driving gain value received from the second display device 100-2 through the second communication interface 130 and the driving gain value of the display device, and then transmit the identified minimum driving gain value to the first display device 100-1. Here, a processor 140-1 of the first display device may receive the driving gain value, more precisely, the minimum driving gain value between the second driving gain value and the driving gain value of the display device, from the display device, and then transmit the first driving gain value.

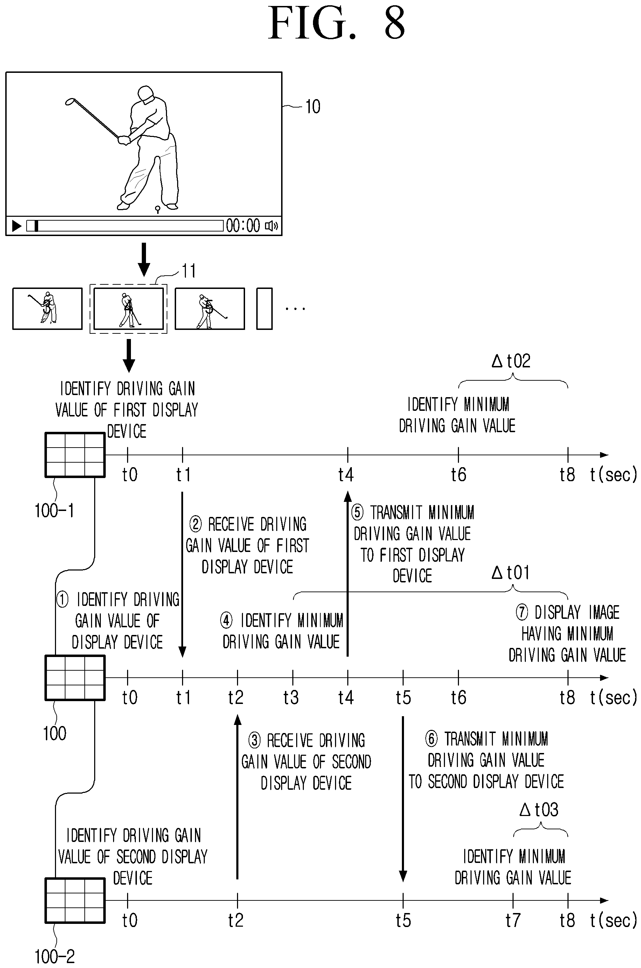

FIG. 8 is a diagram for explaining the display device that displays an image on the basis of an identified driving gain value at a time point set based on the number of the plurality of display devices and the identification value of the display device, according to an embodiment of the present disclosure.

Meanwhile, according to an embodiment of the present disclosure, the processor 140 may identify the driving gain value of the display device for each image frame based on image data corresponding to each of a plurality of image frames included in an image 10. In addition, the processor 140 may control the display device to display the image on the basis of the identified driving gain value at the time point set on the basis of the number of the plurality of display devices and the identification value of the display device.

In detail, the entire the image 10 displayed on the modular display device 1000 may include the plurality of image frames. The processor included in each of the plurality of display devices may identify the driving gain value for the same image frame. Here, the time point at which each processor identifies the minimum driving gain value among the plurality of display devices may be different.

Referring to FIG. 8, at a time point t0, the processor 140 of the display device may identify a driving gain value for a first image frame 11 among the plurality of image frames included in the image 10. Here, the processor of the first display device 100-1 and the processor of the second display device 100-2 may also identify the driving gain value of each display device (e.g., first display device 100-1 and second display device 100-2) at the same time point, i.e., time point t0.

Here, the processor 140 of the display device 100 may receive the first driving gain value from the first display device 100-1 at a time point t1, receive the second driving gain value from the second display device 100-2 at a time point t2, and then identify the minimum driving gain value at a time point t3.

However, the processor of the first display device 100-1 may receive the driving gain value corresponding to the minimum value between the driving gain value of the display device and the driving gain value of the second display device 100-2 from the display device at a time point t4. In addition, the processor of the first display device 100-1 may identify the minimum driving gain value between the driving gain value received from the display device 100 and the driving gain value of the first display device 100-1 at a time point t6.

In addition, the processor of the second display device 100-2 may receive the driving gain value corresponding to the minimum value between the driving gain value of the display device and the driving gain value of the first display device 100-1, from the display device at a time point t5. In addition, the processor of the second display device 100-2 may identify the minimum driving gain value between the driving gain value received from the display device 100 and the driving gain value of the second display device 100-2 at a time point t7.

As described above, the time points at which the plurality of display devices identify the minimum driving gain value for the same image frame may be different from each other. Therefore, it is necessary to synchronize the time points at which the plurality of display devices respectively display the same image frame by applying the minimum driving gain value to each other.

To this end, according to an embodiment of the present disclosure, the time point at which the processor 140 of the display device 100 displays the image on the basis of the minimum driving gain value may be set on the basis of the number of the plurality of display devices and the identification value of the display device.

For example, referring to FIG. 8, assume that the identification value of the first display device 100-1 is 001, the identification value of the second display device 100-2 is 002, and identification value of the third display device 100-3 is 003. A time point t8 at which the display device 100 displays the image by applying the minimum driving gain value may be a time point a time △t01 is taken after identifying the minimum driving gain value. Here, the time △t01 may be set on the basis of 002, which is the identification value of the display device 100, and 3, which is information on the number of the plurality of display devices.

Meanwhile, the time point t8 at which the first display device 100-1 displays the image by applying the minimum driving gain value may be a time point △t02 taken after identifying the minimum driving gain value. Here, the time △t02 may be set on the basis of 001, which is the identification value of the first display device 100-1, and 3, which is the information on the number of the plurality of display devices.

Meanwhile, the time point t8 at which the second display device 100-2 displays the image by applying the minimum driving gain value may be a time point △t03 taken after identifying the minimum driving gain value. Here, the time △t03 may be set on the basis of 003, which is the identification value of the second display device 100-2, and 3, which is the information on the number of the plurality of display devices.

In this way, the minimum driving gain value of each of the plurality of display devices included in the modular display device 1000 may be identified, and the time point at which the image is displayed on the basis of the identified driving gain value may be set on the basis of the identification value of each display device and the number of the plurality of display devices. Accordingly, the time point at which the minimum driving gain value is applied to the same image frame may be the same even in case that the time points at which the plurality of display devices identify the minimum driving gain value are different from each other.

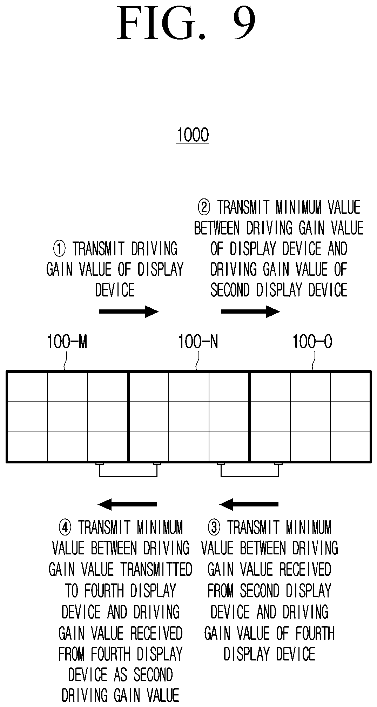

FIG. 9 is an example diagram showing that the display device transmits the driving gain value to the second display device through the second communication interface, and receives the second driving gain value from the second display device through the second communication interface, according to another embodiment of the present disclosure.

Meanwhile, according to an embodiment of the present disclosure, the processor 140 may also first transmit the driving gain value of the display device 100 before receiving the first driving gain value from the first display device 100-1, or receiving the second driving gain value from the second display device 100-2.

In detail, the processor 140 may identify the driving gain value of the display device 100, and then transmit the identified driving gain value to either the first display device 100-1 through the first communication interface 120 or the second display device 100-2 through the second communication interface 130. Here, the transmitted driving gain value may be stored in the memory of the display device 100.

In addition, the processor 140 may receive the first driving gain value from the first display device 100-1 through the first communication interface 120, or receive the second driving gain value from the second display device 100-2 through the second communication interface 130.

In addition, the processor 140 may compare the received first driving gain value or the received second driving gain value with the driving gain value of the display device 100 stored in the memory, and may apply the driving gain value having the minimum value to the display device 100.

For example, referring to FIG. 9, assume that the display device 100 according to an embodiment of the present disclosure is a display device M or 100-M, and the second display device 100-2 connected to the display device 100 through the second communication interface 130 is a display device N or 100-N.

In addition, assume that a display device O or 100-O refers to the fourth display device 100-4 connected to the second display device 100-2 in the second direction using the daisy chain method, based on the display device 100.

Meanwhile, assume that another display device connected to the display device 100 through the first communication interface 120, that is, the first display device 100-1 adjacent to one side of the display device 100 does not exist.

Here, the processor 140 of the display device M or 100-M, which corresponds to the display device 100, may identify the driving gain value of the display device 100, and then transmit the same to the display device N or 100-N, which is the second display device 100-2, through the second communication interface 130. In addition, the processor 140 may store the driving gain value of the transmitted display device M or 100-M in the memory.

In addition, the processor of the display device N or 100-N that receives the driving gain value of the display device M or 100-M from the display device M or 100-M may compare the received driving gain value of the display device M or 100-M with the driving gain value of the display device N or 100-N, and then transmit the driving gain value, which corresponds to the minimum value, to the display device O or 100-O through the second communication interface of the display device N or 100-N. In addition, the processor of the display device N or 100-N may store the driving gain value transmitted to the display device O or 100-O in the memory of the display device N or 100-N.

In addition, the processor of the display device O or 100-O may compare the received driving gain value (e.g., driving gain value corresponding to the minimum value between the driving gain value of the display device M or 100-M and the driving gain value of the display device N or 100-N) and the driving gain value of the display device O or 100-O, and then transmit the driving gain value corresponding to the minimum value to the display device N or 100-N through the first communication interface of the display device O or 100-O. Here, the processor of the display device O or 100-O may apply the driving gain value corresponding to the identified minimum value to the display device O or 100-O.

In addition, the processor of the display device N or 100-N may transmit the received driving gain value (e.g., driving gain value corresponding to the minimum value between the driving gain value received by the display device O from the display device M or 100-M and the driving gain value transmitted by the display device O or 100-O to the display device M or 100-M) to the display device M or 100-M through the first communication interface of the display device N or 100-N.

In this way, the processor 140 of the display device 100 may first transmit, to the first display device 100-1 or the second display device 100-2, the driving gain value of the display device 100 that is identified based on the arrangement form of the plurality of display devices included in the modular display device 1000 and the position of the display device 100.

Meanwhile, according to an embodiment of the present disclosure, the processor 140 may segment data corresponding to the minimum driving gain value between the first driving gain value and the driving gain value of the display device 100 into third data and fourth data, transmit the third data to the second display device 100-2 through the second communication interface 130, and then transmit the fourth data to the second display device 100-2 through the second communication interface 130.

In addition, according to an embodiment of the present disclosure, the processor may segment the data corresponding to the minimum driving gain value among the second driving gain value and the driving gain value of the display device 100 into fifth data and sixth data, transmit the fifth data to the first display device 100-1 through the first communication interface 120, and then transmit the sixth data to the first display device 100-1 through the first communication interface 120.

In detail, according to an embodiment of the present disclosure, the data corresponding to the driving gain value may be the data of 11 bits. Here, the processor 140 may segment the data of 11 bits, corresponding to the driving gain value, based on the UART communication method that may transmit and receive data of up to 8 bits. For example, the processor 140 may segment the minimum driving gain value of 11 bits into the third data of 7 bits and the fourth data of 4 bits. However, the present disclosure is not limited thereto, and the processor 140 may segment the minimum driving gain value of 11 bits into various sizes of the third and the fourth data.

In addition, the processor 140 may sequentially transmit the segmented third and fourth data. To describe again using the above example, the processor 140 may transmit the data corresponding to the driving gain value twice by transmitting the third data of 7 bits and then transmitting the fourth data of 4 bits.

Meanwhile, the third data and the fourth data may further include the most significant bit (MSB) and the least significant bit (LSB).

In addition, in some embodiments of the present disclosure, at least one of the third data or the fourth data may further include verification data. In detail, the processor 140 may generate the verification data by applying the mathematical equation or the like, stored in the display device 100, to the driving gain value.

Here, the verification data may be used to detect an error in data on the driving gain value received from the display device 100 by another the display device (e.g., first display device 100-1 or second display device 100-2) that receives the data on the driving gain value from the display device 100.

In detail, the first display device 100-1 may generate new verification data by applying the same mathematical equation to the driving gain value received from the display device 100, and identify whether the newly generated verification data matches the verification data received from the display device 100. In addition, the first display device 100-1 may identify whether the data corresponding to the driving gain value received from the display device 100 is appropriate on the basis of an identification result. Meanwhile, to this end, the plurality of display devices included in the modular display device 1000 may store the same mathematical equation for generating the verification data.

To describe again using the above example, the processor 140 may generate the data of 11 bits, corresponding to the minimum driving gain value between the driving gain value of the display device 100 and the second driving gain value of the second display device 100-2, and then segment the same into the data of 7 bits and the data of 4 bits. In addition, the processor 140 may generate the verification data of 3 bits by applying the pre-stored mathematical equation to the minimum driving gain value.

In addition, the processor 140 may transmit the third data acquired by combining the MSB of 1 bit and the data of 7 bits (some of the data corresponding to the minimum driving gain value) to the first display device 100-1 through the first communication interface 120. In addition, the processor 140 may transmit the fourth data, acquired by combining the verification data of 3 bits, the data of 4 bits (the remaining data other than some of the data corresponding to the minimum driving gain value), and the LSB of 1 bit, to the first display device 100-1 through the first communication interface 120.

The processor of the first display device 100-1 may then extract the data of 7 bits from the first data, extract the data of 4 bits from the second data, and identify the entire data of 11 bits, corresponding to the minimum driving gain value. In addition, the processor of the first display device 100-1 may generate new verification data using the mathematical equation stored in the first display device 100-1. In addition, the processor of the first display device 100-1 may compare the generated verification data with the verification data included in the fourth data, and identify whether the data corresponding to the driving gain value received from the display device is appropriate.

Meanwhile, the description provided above may be equally applied to the fifth data and the sixth data transmitted to the first display device 100-1 through the first communication interface 120.

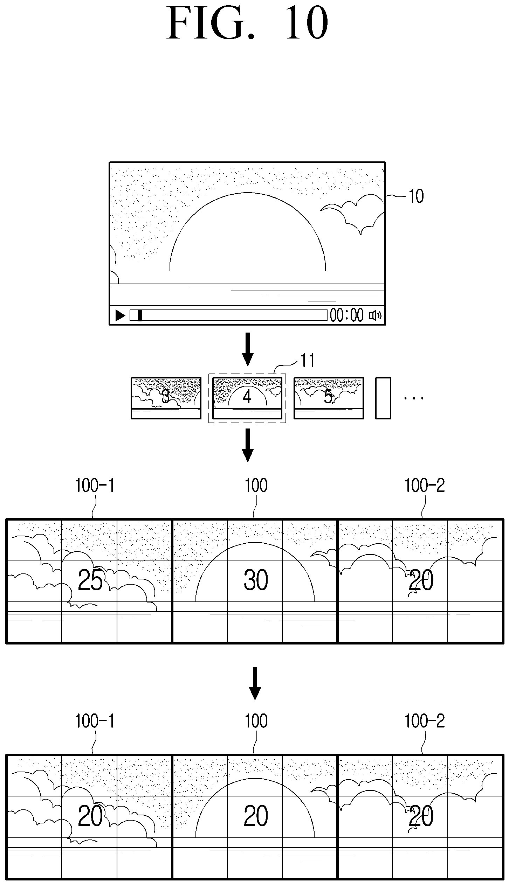

FIG. 10 is an example diagram showing that the image corresponding to each display device is displayed on the basis of the driving gain value equal to those of the plurality of display devices included in the modular the display device, according to an embodiment of the present disclosure.

According to an embodiment of the present disclosure, the display device may display the image corresponding to the display device on the basis of the driving gain value equal to those of the plurality of display devices included in the modular display device 1000.

In detail, referring to FIG. 10, for the first image frame 11 among the plurality of image frames included in the image 10, the driving gain value of the first display device 100-1 may be identified as 25, the driving gain value of the display device 100 may be identified as 30, and the driving gain value of the second display device 100-2 may be identified as 20, respectively, among the plurality of display devices included in the modular display device 1000.

Here, based on the UART communication, the display device 100 and the first display device 100-1 may receive the driving gain value of the second display device 100-2, which corresponds to the minimum driving gain value. In addition, the display device 100 and the first display device 100-1 may identify the driving gain value for a first image frame as 20, which is the minimum driving gain value (that is, the driving gain value of the second display device 100-2).

In addition, based on the UART communication, the second display device 100-2 may receive the driving gain value of the first display device 100-1 from the display device. That is, the second display device 100-2 may receive 25, which is the driving gain value of the first display device 100-1 that corresponds to the minimum value between 30, which is the driving gain value of the display device, and 25, which is the driving gain value of the first display device 100-1, from the display device. In this way, the second display device 100-2 may also identify the driving gain value for the first image frame as 20, which is the minimum gain value (that is, the driving gain value of the second display device 100-2).

Accordingly, referring to FIG. 10, the plurality of display devices (that is, the display device, the first display device 100-1, and the second display device 100-2) included in the modular display device 1000 may adjust the luminance of the image for the first image frame on the basis of 20, which is the same driving gain value. As a result, the user may view the entire image displayed with a constant luminance through the modular display device 1000.

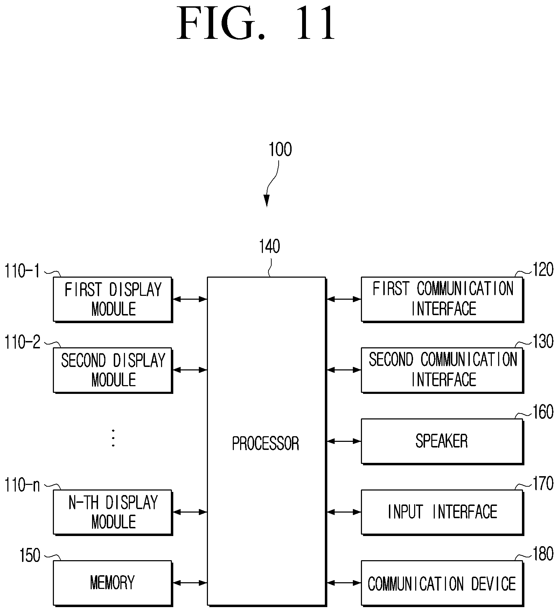

FIG. 11 is a detailed configuration diagram of the display device according to an embodiment of the present disclosure.

Referring to FIG. 11, the display device 100 according to an embodiment of the present disclosure may include the plurality of display modules 110-1, 110-2, ..., and 110-n, the first communication interface 120, the second communication interface 130, the processor 140, a memory 150, a speaker 160, an input interface 170, and a communication device 180. Hereinafter, a portion that overlaps the description above is omitted or abbreviated.

The memory 150 may store an operating system O/S for driving the display device 100. In addition, the memory 150 may store software programs or applications for operating the display device 100 according to the various embodiments of the present disclosure. In addition, the memory 150 may store various kinds of information such as various data input, set, or generated during execution of the programs or the applications.

Meanwhile, according to an embodiment of the present disclosure, the memory 150 may store information on the predetermined identification value of the display device 100 and the number of plurality of display devices included in the modular display device 1000. In addition, the memory 150 may store the image data corresponding to the entire image or the image data corresponding to the segmented image corresponding to the display device.

In addition, according to an embodiment of the present disclosure, the memory 150 may store the driving gain value of the display device 100, the first driving gain value, and the second driving gain value.

The speaker 160 may output various audio signals on which various processing operations such as decoding, amplification, and noise filtering are performed by an audio processing device (not shown). Here, the audio signal may be an audio signal related to the image displayed on the plurality of display modules 110. In addition, the speaker 160 may output various notification sounds or voice messages.

The input interface 170 may be implemented such as a touch screen, a touch pad, a key button, or a key pad. The processor may receive, from the user through the input interface 170, a command that sets the identification value of the display device and the information on the number of the plurality of display devices included in the modular display device 1000.

The communication device 180 may communicate with various electronic devices based on various types of communication methods. As an example, the processor 140 may communicate with the external device through the communication device 180 to thus receive the image data corresponding to the image displayed on the display device. Here, the image data may include the image data related to the entire image the image data related to the segmented image of the entire image corresponding to the position or identification value of the display device in the modular display device 1000.

Meanwhile, the processor 140 may receive, through the communication device 180, the command that sets the identification value of the display device and the information on the number of the plurality of display devices included in the modular display device 1000.

To this end, the communication device 180 may include a communication module such as a short-range wireless communication module (not shown) or a wireless local area network (LAN) communication module (not shown). Here, the short-range wireless communication module (not shown) may be a communication module that performs data communication with the external device disposed in a short distance in a wireless manner, and may be, for example, an infrared ray (IR) communication module, a Bluetooth module, a zigbee module, or a near field communication (NFC) module. In addition, the wireless LAN communication module (not shown) may be a module that is connected to an external network and performs the communication based on a wireless communication protocol such as wireless fidelity (WiFi) or Institute of Electrical and Electronics Engineers (IEEE).

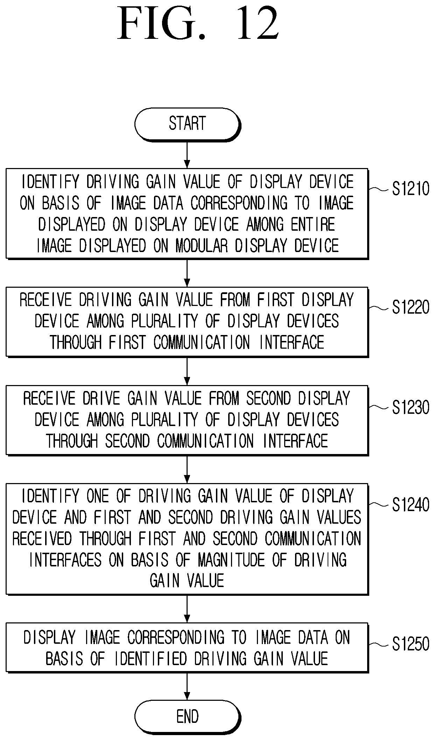

FIG. 12 is a flowchart schematically showing a control method for a display device according to an embodiment of the present disclosure.

Referring to FIG. 12, the processor 140 may first identify the driving gain value of the display device 100 on the basis of the image data corresponding to the images displayed on the display devices among the entire image displayed on the modular display device 1000(S1210), and receive the first driving gain value from the first display device 100-1 among the plurality of display devices through the first communication interface 120(S1220). In addition, the processor may receive the second driving gain value from the second display device 100-2 among the plurality of display devices through the second communication interface 130 (S1230) .

Here, the first driving gain value refers to the driving gain value received from the first display device 100-1, and may be different from the driving gain value identified for the first display device 100-1.

In addition, the second driving gain value refers to the driving gain value received from the second display device 100-2, and may be different from the driving gain value identified for the second display device 100-2.

In addition, the processor 140 may identify one of the driving gain value of the display device and the first and second driving gain values received through the first and second communication interfaces 120 and 130 on the basis of the magnitude of the driving gain value(S1240), and then display the image corresponding to the image data on the basis of the identified driving gain value(S1250).

Here, in some embodiments of the present disclosure, the driving gain value received from the first display device 100-1 may be one of the first driving gain value of the first display device 100-1 and the driving gain values of the display devices sequentially connected to the first display device 100-1 based on the daisy chain structure among the plurality of display devices; and the second driving gain value received from the second display device 100-2 may be one of the driving gain value of the second display device 100-2 and the driving gain values of the display devices sequentially connected to the second display device 100-2 based on the daisy chain structure among the plurality of display devices.

Meanwhile, the various embodiments of the present disclosure described above may be implemented in a computer or a computer-readable recording medium using software, hardware, or a combination of software and hardware. In some cases, the embodiments described in the present disclosure may be implemented by the processor itself. According to software implementation, the embodiments such as the procedures and functions described in the specification may be implemented by separate software modules. Each of the software modules may perform one or more functions and operations described in the specification.

Meanwhile, a non-transitory computer-readable medium may store computer instructions for performing processing operations of the display device according to the various embodiments of the present disclosure described above. The computer instructions stored in the non-transitory computer-readable medium allow a specific device to perform the processing operations of the display module 110 according to the various embodiments described above in case that the instructions are executed by a processor of the specific device.

The non-transitory computer-readable medium is not a medium that stores data for a while, such as a register, a cache, or a memory, and refers to a medium that semi-permanently stores data and is readable by the device. A specific example of the non-transitory computer-readable medium may include a compact disk (CD), a digital versatile disk (DVD), a hard disk, a Blu-ray disk, a universal serial bus (USB), a memory card, a read-only memory (ROM), or the like.

Although the embodiments are shown and described in the present disclosure as above, the present disclosure is not limited to the above-mentioned specific embodiments, and may be variously modified by those skilled in the art to which the present disclosure pertains without departing from the gist of the present disclosure as claimed in the accompanying claims. These modifications should also be understood to fall within the scope and spirit of the present disclosure.

## Claims

1. A display device among the plurality of display devices included in a modular display device, the device comprising:
a plurality of display modules;
a first communication interface;
a second communication interface; and
a processor configured to
identify a driving gain value of the display device on the basis of image data of an image corresponding to images displayed on the plurality of display modules among an entire image displayed on the modular display device,
receive a first driving gain value from a first display device among the plurality of display devices through a first communication interface,
receive a second driving gain value from a second display device among the plurality of display devices through a second communication interface,
identify one of the driving gain value of the display device and the first and second driving gain values received through the first and second communication interfaces on the basis of a magnitude of the driving gain value, and
control the plurality of display modules to display the image corresponding to the image data on the basis of the identified driving gain value,
wherein the first driving gain value received from the first display device is one of the driving gain value of the first display device and the driving gain values of the display devices sequentially connected to the first display device based on a daisy chain structure among the plurality of display devices, and
the second driving gain value received from the second display device is one of the driving gain value of the second display device and the driving gain values of the display devices sequentially connected to the second display device based on the daisy chain structure among the plurality of display devices.

2. The device as claimed in claim 1, wherein the first driving gain value received from the first display device is a minimum driving gain value among the driving gain value of the first display device and the driving gain values of the display devices sequentially connected to the first display device,
the second driving gain value received from the second display device is a minimum driving gain value among the driving gain value of the second display device and the driving gain values of the display devices sequentially connected to the second display device, and
the processor is configured to
identify the minimum driving gain value among the driving gain value of the display device and the first and second driving gain values received through the first and second communication interfaces, and
control the display device to display the image corresponding to the image data on the basis of the identified minimum driving gain value.

3. The device as claimed in claim 1, wherein the processor is configured to
identify the driving gain value of the display device for each image frame based on the image data corresponding to each of the plurality of image frames included in the image, and
control the display device to display the image on the basis of the identified driving gain value at a time point set based on the number of the plurality of display devices and the identification value of the display device.

4. The device as claimed in claim 1, wherein the processor is configured to
identify a minimum driving gain value between the first driving gain value received from the first display device through the first communication interface and the driving gain value of the display device, and
transmit the identified minimum driving gain value to the second display device through the second communication interface.

5. The device as claimed in claim 1, wherein the processor is configured to
identify a minimum driving gain value between the second driving gain value received from the second display device through the second communication interface and the driving gain value of the display device, and
transmit the identified minimum driving gain value to the first display device through the first communication interface.

6. The device as claimed in claim 4, wherein the processor is configured to
segment data corresponding to the identified minimum driving gain value into first data and second data,
transmit the first data to the second display device through the second communication interface, and then transmit the second data to the second display device through the second communication interface.

7. The device as claimed in claim 1, wherein the display device displays the image corresponding to the display device on the basis of the driving gain value equal to those of the plurality of display devices.

8. The device as claimed in claim 1, wherein the first display device is adjacent to the display device disposed on one side of the display device, and
the second display device is adjacent to the display device disposed on the other side of the display device.

9. A control method for a display device among the plurality of display devices included in a modular display device, the method comprising:
identifying a driving gain value of the display device on the basis of image data corresponding to images displayed on the plurality of display devices among an entire image displayed on the modular display device;
receiving a first driving gain value from a first display device among the plurality of display devices through a first communication interface;
receiving a second driving gain value from a second display device among the plurality of display devices through a second communication interface;
identifying one of the driving gain value of the display device and the first and second driving gain values received through the first and second communication interfaces on the basis of a magnitude of the driving gain value; and
displaying the image corresponding to the image data on the basis of the identified driving gain value,
wherein the first driving gain value received from the first display device is one of the driving gain value of the first display device and the driving gain values of the display devices sequentially connected to the first display device based on a daisy chain structure among the plurality of display devices, and
the second driving gain value received from the second display device is one of the driving gain value of the second display device and the driving gain values of the display devices sequentially connected to the second display device based on the daisy chain structure among the plurality of display devices.

10. The method as claimed in claim 10, wherein the first driving gain value received from the first display device is a minimum driving gain value among the driving gain value of the first display device and the driving gain values of the display devices sequentially connected to the first display device,
the second driving gain value received from the second display device is a minimum driving gain value among the driving gain value of the second display device and the driving gain values of the display devices sequentially connected to the second display device,
in the identifying of the one of the driving gain value of the display device and the first and second driving gain values received through the first and second communication interfaces, the minimum driving gain value is identified among the driving gain value of the display device and the first and second driving gain values received through the first and second communication interfaces, and
in the displaying, the image corresponding to the image data is displayed on the basis of the identified minimum driving gain value.

11. The method as claimed in claim 9, wherein in the identifying of the driving gain value of the display device, the driving gain value of the display device for each image frame is identified based on the image data corresponding to each of the plurality of image frames included in the image, and
in the displaying, the display device is controlled to display the image on the basis of the identified driving gain value at a time point set based on the number of the plurality of display devices and the identification value of the display device.

12. The method as claimed in claim 9, further comprising:
identifying a minimum driving gain value between the first driving gain value received from the first display device through the first communication interface and the driving gain value of the display device; and
transmitting the identified minimum driving gain value to the second display device through the second communication interface.

13. The method as claimed in claim 9, further comprising:
identifying a minimum driving gain value between the second driving gain value received from the second display device through the second communication interface and the driving gain value of the display device; and
transmitting the identified minimum driving gain value to the first display device through the first communication interface.

14. The method as claimed in claim 12, wherein the transmitting further includes
segmenting data corresponding to the identified minimum driving gain value into first data and second data,
transmitting the first data to the second display device through the second communication interface, and then transmitting the second data to the second display device through the second communication interface.

15. The method as claimed in claim 9, wherein in the displaying, the image corresponding to the display device is displayed on the basis of the driving gain value equal to those of the plurality of display devices.
